# EUROPEAN PATENT APPLICATION

(11) **EP 2 772 946 A1**
(43) Date of publication of application: **03.09.2014**
(21) Application number: 12843585.6
(22) Date of filing: 24.10.2012
(51) Int. Cl.: H01L 31/042

(54) **SOLAR CELL MODULE AND SOLAR CELL ARRAY**

(30) Priority: 24.10.2011 JP 2011232581
(71) Applicant: Kyocera Corporation, Kyoto-shi Kyoto 612-8501 (JP)
(72) Inventor: KITANO, Takahiro, Kyoto-shi Kyoto 612-8501 (JP); TODA, Kazuhide, Kyoto-shi Kyoto 612-8501 (JP)
(74) Representative: Viering, Jentschura & Partner Patent- und Rechtsanwälte
(86) International application number: PCT/JP2012/077451
(87) International publication number: WO 2013/061995

(57) **Abstract**

According to the invention, there is provided a solar cell module including: a solar cell panel which includes a first surface and a second surface opposite to the first surface, and includes first and second side portions at side surfaces different from each other at a peripheral portion; a first holding member which holds the first side portion; a second holding member which holds the second side portion; and an elongated reinforcement member which is disposed on a second surface side of the solar cell panel. At least one of the first holding member and the second holding member includes a first extension portion which protrudes in a direction from the first surface to the second surface of the solar cell panel, and a second extension portion which is bent in an inner direction along the second surface of the solar cell panel and is provided with a notch portion. A first end portion of one end of the reinforcement member is inserted into the notch portion of the second extension portion, and a second end portion of the one end of the reinforcement member, which is located close to the solar cell panel as compared to the first end portion, is fixed to the first extension portion of the holding member.

## Description

### Technical Field

The present invention relates to a solar cell module and a solar cell array including a plurality of solar cell modules.

### Background Art

A typical solar cell module includes a solar cell panel, a frame that is mounted on a peripheral portion of the solar cell panel, and a terminal box which is disposed on a rear surface side that is opposite to a light receiving surface of the solar cell panel and which extracts generated electric power of the solar cell panel.

In addition, on a rear surface side of the solar cell module, at a portion in which the terminal box is not formed, an elongated reinforcement member capable of supporting the solar cell panel is mounted on the frame in some cases (for example, refer to International Publication No. 2008/139610). Since the reinforcement member is provided on the rear surface side of the solar cell module, even when stress due to wind, snow or the like is applied to the light receiving surface side of the solar cell panel, the solar cell panel is prevented from being largely curved and broken.

However, when the reinforcement member is added as a constituent element to the solar cell module, reduction in weight of the solar cell module is hindered. In addition, there is a case where the mounting of the reinforcement member on the frame is not easy, or reinforcement of the solar cell panel is not sufficient.

Accordingly, a solar cell module and a solar cell array, in which reduction in weight of the solar cell module is realized even when using a reinforcement member, and mounting of the reinforcement member on a solar cell panel is simplified, and which have a good load-resistant performance, have been demanded.

An object of the invention is to provide a solar cell module and a solar cell array, in which reduction in weight is realized, and which can be easily assembled and have good load-resistant performance.

### Disclosure of Invention

According to an aspect of the invention, there is provided a solar cell module including: a solar cell panel which includes a first surface and a second surface opposite to the first surface, and includes first and second side portions at side surfaces different from each other at a peripheral portion; a first holding member which holds the first side portion; a second holding member which holds the second side portion; and an elongated reinforcement member which is disposed on a second surface side of the solar cell panel. At least one of the first holding member and the second holding member includes a first extension portion which protrudes in a direction from the first surface to the second surface of the solar cell panel, and a second extension portion which is bent in an inner direction along the second surface of the solar cell panel and is provided with a notch portion. A first end portion of one end of the reinforcement member is inserted into the notch portion of the second extension portion, and a second end portion of the one end of the reinforcement member, which is located close to the solar cell panel as compared to the first end portion, is fixed to the first extension portion of the holding member.

According to another aspect of the invention, there is provided a solar cell array including a plurality of the solar cell modules.

### Brief Description of Drawings

[Fig. 1] Fig. 1 is an exploded perspective view schematically illustrating an embodiment of a solar cell panel that constitutes a solar cell module according to an aspect of the invention.
[Fig. 2] Fig. 2 is a view schematically illustrating an embodiment of the solar cell module according to the aspect of the invention, and is a plan view that is seen from a light receiving surface side of the solar cell module.
[Fig. 3] Fig. 3 is a view schematically illustrating the embodiment of the solar cell module according to the aspect of the invention, and is a plan view that is seen from a rear surface side of the solar cell module.
[Fig. 4] Fig. 4 is a perspective view schematically illustrating the embodiment of the solar cell module according to the aspect of the invention.
[Fig. 5] Fig. 5 is an enlarged perspective view of a portion A in Fig. 4.
[Fig. 6] Fig. 6 is a view schematically illustrating the embodiment of the solar cell module according to the aspect of the invention, and is an exploded perspective view that is seen from the rear surface side of the solar cell module.
[Fig. 7] Fig. 7 is an exploded cross-sectional view illustrating one end of the solar cell module along a line X1-X'1 in Fig. 4.
[Fig. 8] Fig. 8 is a cross-sectional view illustrating one end of the solar cell module along the line X1-X'1 in Fig. 4.
[Fig. 9] Fig. 9 is a cross-sectional view illustrating one end of the solar cell module along a line X2-X'2 in Fig. 4.
[Fig. 10] Fig. 10 is a cross-sectional view illustrating one end of the solar cell module along a line XO-X'0 in Figs. 2 and 3.
[Fig. 11] Fig. 11 is a perspective view illustrating a part of a first holding member of the solar cell module illustrated in Fig. 10.
[Fig. 12] Fig. 12 is a view schematically illustrating an embodiment of the solar cell module according to the aspect of the invention, and is a cross-sectional view at one end of the solar cell module.
[Fig. 13] Fig. 13 is a perspective view illustrating a part of a first holding member of the solar cell module illustrated in Fig. 12.
[Fig. 14] Fig. 14 is a view schematically illustrating an embodiment of the solar cell module according to the aspect of the invention, and is a cross-sectional view at one end of the solar cell module.
[Fig. 15] Fig. 15 is an exploded perspective view illustrating a part of a first holding member of the solar cell module illustrated in Fig. 14.
[Fig. 16] Fig. 16 is a view schematically illustrating an embodiment of the solar cell module according to the aspect of the invention, and is a cross-sectional view at one end of the solar cell module.
[Fig. 17] Fig. 17 is a view schematically illustrating an embodiment of the solar cell module according to the aspect of the invention, and is a cross-sectional view at one end of the solar cell module.
[Fig. 18] Fig. 18 is a view schematically illustrating an embodiment of the solar cell module according to the aspect of the invention, and is an exploded cross-sectional perspective view at one end of the solar cell module.
[Fig. 19] Fig. 19 is a view schematically illustrating an embodiment of the solar cell module according to the aspect of the invention, and is an exploded cross-sectional view at one end of the solar cell module.
[Fig. 20] Fig. 20 is a cross-sectional view at one end of the solar cell module illustrated in Fig. 19.
[Fig. 21] Fig. 21 is a view schematically illustrating an embodiment of the solar cell module according to the aspect of the invention, and is a cross-sectional view at one end of the solar cell module.
[Fig. 22] Fig. 22 is a view schematically illustrating an embodiment of the solar cell module according to the aspect of the invention, and is a perspective view at one end of the solar cell module.
[Fig. 23] Fig. 23 is a perspective view schematically illustrating an embodiment of the solar cell module according to the aspect of the invention.
[Fig. 24] Fig. 24 is an exploded perspective view which is seen from a rear surface side of the solar cell module illustrated in Fig. 23.
[Fig. 25] Fig. 25 is a perspective view schematically illustrating a solar cell array according to an aspect of the invention.
[Fig. 26] Fig. 26 is a partial cross-sectional view schematically illustrating an embodiment of the solar cell array according to the aspect of the invention.
[Fig. 27] Fig. 27 is a partial cross-sectional view schematically illustrating an embodiment of the solar cell array according to the aspect of the invention.
[Fig. 28] Fig. 28 is a partial cross-sectional view schematically illustrating an embodiment of the solar cell array according to the aspect of the invention.

### Embodiments for Carrying out of the Invention

Hereinafter, an embodiment of a solar cell module and a solar cell array according to the invention will be described in detail with reference to the attached drawings. Note that, in the drawings, the same reference numerals are given to portions having the similar configuration and function. In addition, the drawings are schematically illustrated, and thus the size of constituent elements, the positional relationship between the constituent elements, and the like are not necessarily illustrated accurately in the drawings.

### <Solar Cell Module>

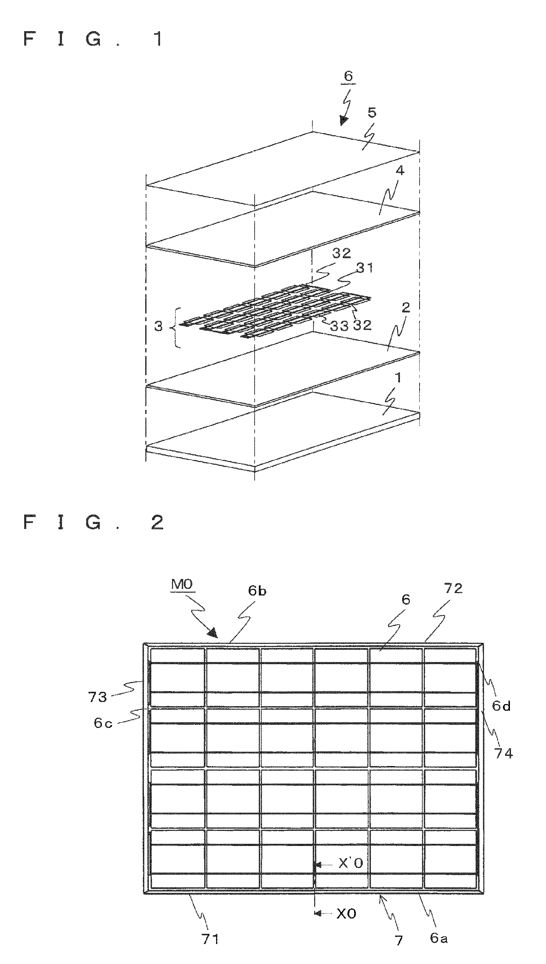

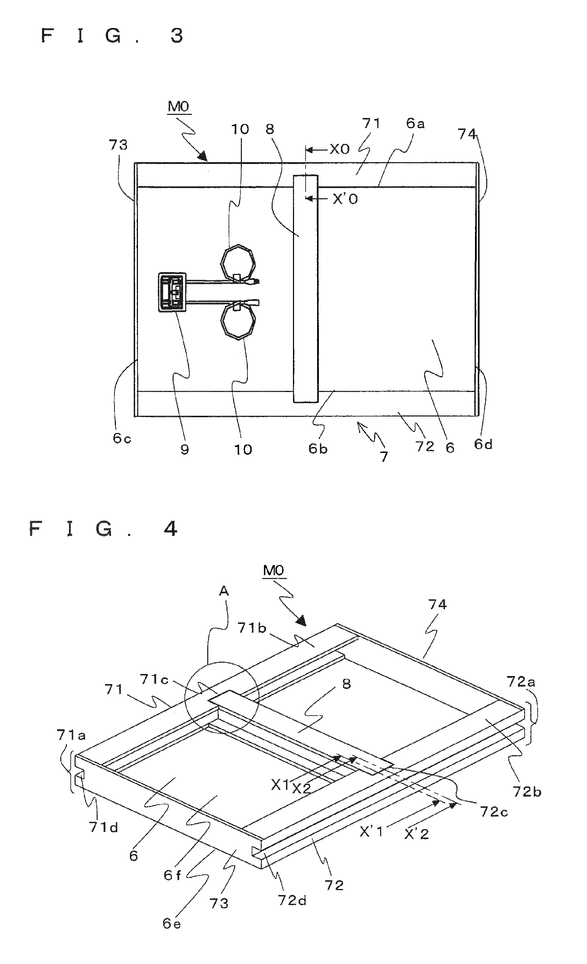

First, a basic configuration of a solar cell module will be described. Fig. 1 is an exploded perspective view illustrating a layered structure of a solar cell panel 6 that constitutes a solar cell module M0 illustrated in Figs. 2 and 3. In the exploded perspective view, a rear surface side of the solar cell panel 6 faces upward, and a front surface (light receiving surface) side, which is opposite to the rear surface of the solar cell panel 6, faces downward. Fig. 2 illustrates an appearance of the solar cell module M0 on a front surface side in plan view. Fig. 3 illustrates an appearance of the solar cell module M0 on a rear surface side in plan view.

As illustrated in Fig. 1, a first sealing material 2 on a light receiving surface side is disposed on a translucent base 1, and a solar cell element group 3 in which a plurality of solar cell elements 31 are electrically connected to each other is disposed on the first sealing material 2. A second sealing material 4 on a rear surface side is disposed on the solar cell element group 3, and a rear surface sheet 5 is disposed on the second sealing material 4.

As the base 1, a translucent substrate having a flat sheet shape or the like is used, and for example, glass, a synthetic resin, or the like may be used. In a case of using the glass for the base 1, for example, a white sheet glass, tempered glass, heat-strengthened glass, a heat reflective glass, or the like, which has a thickness of approximately 3 mm to 5 mm, may be used. In addition, in a case of using the synthetic resin for the base 1, for example, a polycarbonate resin, an acrylic resin or the like which has a thickness of approximately 5 mm may be used.

The solar cell element 31, which is a photoelectric conversion unit and constitutes the solar cell element group 3, includes a semiconductor substrate such as a single-crystalline silicon substrate or a polycrystalline silicon substrate which has a thickness of approximately 0.1 mm to 0.3 mm and which performs photoelectric conversion. In addition, an antireflective film such as a silicon nitride film or the like is formed on a light receiving surface side of the solar cell element 31 by plasma CVD or the like. In addition, an electrode 33 is provided on the light receiving surface and a rear surface of the solar cell element 31, respectively. The electrode 33 is, for example, formed by applying a conductive paste containing silver or the like using, for example, screen printing and by firing the conductive paste. For example, a surface of the electrode 33 may be coated with solder. Electrodes 33 of the solar cell elements 31, which are adjacent to each other, are electrically connected via a connection member 32 such as a copper wire.

In addition, the photoelectric conversion unit is not limited to the above-described crystalline silicon-based solar cell. For example, the photoelectric conversion unit may be constituted by various materials such as chalcopyrite-based solar cell (for example, including CIGS(Cu(In, Ga)Se₂), CISS(Cu(In, Ga) (Se, S)₂, CIS(CuInS₂), and the like), a CdTe solar cell, and a solar cell in which a thin amorphous film is formed on a crystalline silicon substrate.

As the first sealing material 2 and the second sealing material 4, a sealing material, which is constituted by a synthetic resin such as EVA (ethylene vinyl acetate copolymer) or PVB (polyvinyl butyral), and which is formed in a sheet shape having a thickness of approximately 0.4 mm to 1 mm by an extruder or the like, is used. In addition, the first sealing material 2 and the second sealing material 4 are softened by performing heating using a laminate apparatus under decompression, and are fused to the solar cell element group 3 and other elements, whereby the base 1 and the solar cell element group 3 are integrated.

EVA or PVB may contain titanium oxide, a pigment, or the like in order to be colored white, for example. In addition, when the first sealing material 2 is colored, a quantity of light that is incident to the solar cell element group 3 decreases, and thus power generation efficiency decreases. Therefore, the first sealing material 2 may be transparent without being colored. In addition, the second sealing material 4 may be transparent without being colored, or may be colored with a color conforming to an ambient installation environment of a site at which a solar cell module M0 is installed. The second sealing material 4 may contain titanium oxide, a pigment, or the like in order to be colored white, for example, whereby light reflected by the second sealing material 2 may be allowed to be incident to the solar cell element group 3.

As the rear surface sheet 5, in order for moisture not to permeate through the resin sheet, for example, a weather-resistant fluorine-based resin sheet with aluminum foil interposed, a PET (polyethylene terephthalate) sheet on which alumina or silica is deposited, or the like may be used.

In addition, the respective components that constitute the solar cell panel 6 are not limited to the above-described aspects as long as the solar cell panel 6 is plate-shaped.

As illustrated in Figs. 2 and 3, the solar cell module M0 includes a frame-shaped holding member 7 that holds an outer edge portion of the solar cell panel 6. The holding member 7 includes a plurality of holding portions that hold side portions present at side surfaces different from each other at a peripheral portion of the solar cell panel 6. For example, the holding member 7 includes a first holding member 71 that holds a first side portion 6a of the solar cell panel 6, and a second holding member 72 that holds a second side portion 6b located on a side (rear side) opposite to the first side portion 6a in approximately parallel with the first side portion 6a. In addition, the holding member 7 includes a third holding member 73 that holds a third side portion 6c that is adjacent to one end side of each of the first side portion 6a and the second side portion 6b, and a fourth holding member 74 that holds a fourth side portion 6d that is adjacent to the other end side of each of the first side portion 6a and the second side portion 6b.

The holding member 7 may be manufactured, for example, by a roll forming process or the like using a metal material such as aluminum or an aluminum alloy. As illustrated in Figs. 2 and 3, the holding member 7 may be configured by joining a plurality of holding members along an outer edge shape of the solar cell panel 6.

As illustrated in Fig. 3, an elongated reinforcement member 8, which supports the solar cell panel 6 from the rear surface side thereof, is disposed between the first holding member 71 and the second holding member 72 on the rear surface side of the solar cell module M0. In addition, a terminal box 9 is disposed on the rear surface side of the solar cell module M0 at a portion at which the reinforcement member 8 is not disposed. The terminal box 9 is used to extract generated electric power from the solar cell panel 6 to the outside through an output cable 10, or to be electrically connected to another solar cell module through the output cable 10.

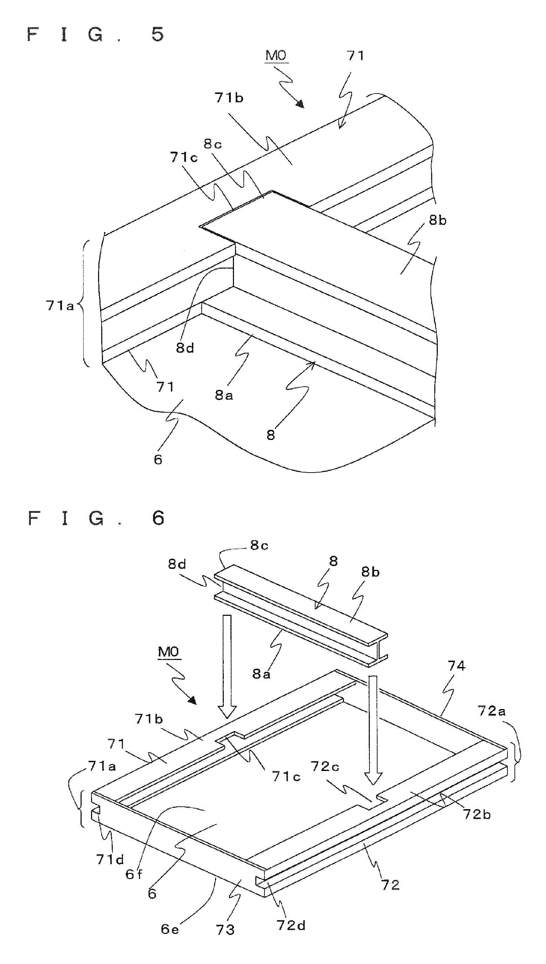

Next, the configuration of the holding member 7, the reinforcement member 8, and the periphery of the reinforcement member 8 will be mainly described in detail with reference to Figs. 4, 5, and 6. Fig. 4 illustrates a schematic configuration, in which the terminal box and the like are omitted, on the rear surface side of the solar cell module M0 by a perspective view. Fig. 5 is an enlarged perspective view of a portion A in Fig. 4. Fig. 6 is an exploded perspective view illustrating a state in which the reinforcement member 8 is mounted from a second surface 6f side which is a rear surface of the solar cell panel 6.

Each of the first holding member 71 and the second holding member 72, which constitute the holding member 7, includes a first extension portion protruding in a direction from a first surface 6e, which is a front surface (light receiving surface) of the solar cell panel 6, to a second surface 6f that is a rear surface opposite to the first surface 6e. That is, the first holding member 71 includes a first extension portion 71a, and the second holding member 72 includes a first extension portion 72a.

In addition, each of the first holding member 71 and the second holding member 72 includes a second extension portion that is bent in an inner direction along the second surface 6f of the solar cell panel 6. That is, the first holding member 71 includes a second extension portion 71b and the second holding member 72 includes a second extension portion 72b. In addition, the second extension portions 71b and 72b are respectively provided with notch portions 71c and 72c into which the reinforcement member 8 is inserted. In addition, the notch portion may be provided to at least one holding member of the first holding member 71 and the second holding member 72. That is, at least one holding member of the first holding member 71 and the second holding member 72 may be provided with both the first extension portion and the second extension portion having the notch portion.

Further, the solar cell module M0 of this embodiment is provided with grooves 71d and 72d, which can also be used for drainage, in the first extension portions 71a and 72a along a longitudinal direction of the first holding member 71 and the second holding member 72.

The reinforcement member 8 is constituted by, for example, a rod-shaped body which has an H-shaped cross-section and is made of aluminum or an aluminum alloy. The reinforcement member 8 has a first surface 8a that faces the second surface 6f of the solar cell panel 6, and a second surface 8b that is opposite to the first surface 8a. In addition, the inside of the reinforcement member 8 may be hollow. Further, in addition to the H shape, a cross-sectional shape of the reinforcement member 8 may be a rectangular shape, a U shape, a triangular shape, a composite cross-sectional shape in which these shapes are combined, or the like. In addition, in this embodiment, an example of using one piece of the reinforcement member 8 is described for simplification, but a plurality of the reinforcement members 8 may be used to further increase load-resistant performance. In addition, the reinforcement member 8 may be provided between holding members at side surfaces different from each other in the peripheral portion of the solar cell panel, and it is not limited to a case in which the reinforcement member 8 is provided between holding members facing each other.

As illustrated in Figs. 5 and 6, a first end portion that is one end portion of the reinforcement member 8 is inserted into each of the notch portions 71c and 72c of the first holding member 71 and the second holding member 72, and a second end portion, which is another end portion in the same direction as the first end portion at a portion different from the first end portion, is fixed to each of the first extension portions 71a and 72a of the first holding member 71 and the second holding member 72. With regard to this configuration, a relationship between the first holding member 71 and the reinforcement member 8 will be described for simplification. In addition, a relationship between the second holding member 72 and the reinforcement member 8 is the same as the relationship between the first holding member 71 and the reinforcement member 8 described as follows, and a description thereof will be omitted.

As illustrated in Fig. 5, a first end portion 8c (end portion on a second surface 8b side of the reinforcement member 8) of one end of the reinforcement member 8 is inserted into the notch portion 71c formed in the first holding member 71, and a second end portion 8d (portion between the first end portion 8c and the first surface 8a of the reinforcement member 8) of the one end of the reinforcement member 8, which is located close to a solar cell panel 6 as compared to the first end portion 8c, is fixed to the first extension portion 71a of the first holding member 71 by screw fastening, rivet fastening, adhesion, or the like.

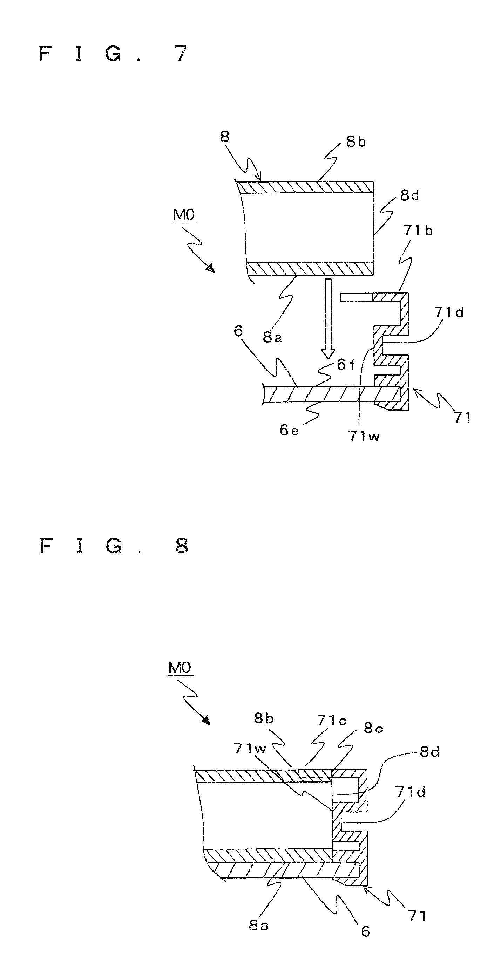

Next, an example of mounting the reinforcement member 8 on the first holding member 71 will be described with reference to Figs. 7 to 11.

As illustrated in Fig. 7, when disposing the reinforcement member 8 in such a manner that the first surface 8a faces the second surface 6f of the solar cell panel 6, an adhesive such as a silicone-based resin, an epoxy-based resin, or an acryl-based resin may be applied onto the first surface 8a of the reinforcement member 8. Alternatively, an elastic member such as a urethane-based resin may be interposed between the reinforcement member 8 and the solar cell panel 6. In addition, the application of the adhesive onto the reinforcement member 8 may be performed in advance before inserting the reinforcement member 8 into the notch portion 71c of the first holding member 71. However, the adhesive may be applied after fixing the reinforcement member 8 with a screw or the like as described below. When the adhesive or the elastic member is interposed between the reinforcement member 8 and the solar cell panel 6, it is possible to suppress foreign matter from entering between the reinforcement member 8 and the solar cell panel 6, and thus it is possible to mitigate impact as much as possible when stress is applied to the reinforcement member from the solar cell panel 6.

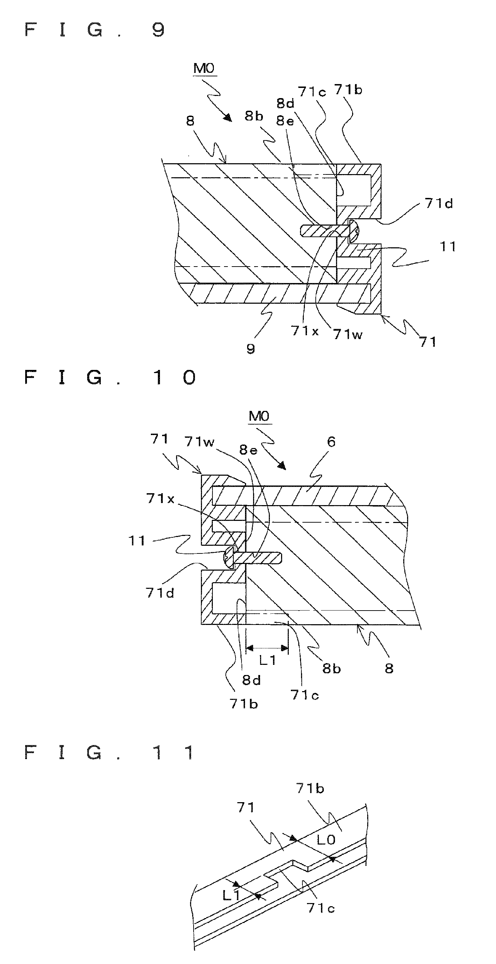

As illustrated in Figs. 8 and 9, the first end portion 8c, which is located at one end portion of the second surface 8b of the reinforcement member 8, is guided along the shape of the notch portion 71c of the first holding member 71, and thus the first end portion 8c can be easily inserted into the notch portion 71c. In addition, the first holding member 71 includes a convex portion 71w that protrudes in an inner direction of the solar cell panel 6, and the convex portion 71w and the second end portion 8d of the reinforcement member 8 come into contact with each other.

In addition, as illustrated in Figs. 9 and 10, a screw hole 71x that is a through-hole is formed at a portion, in which the reinforcement member 8 is located, in the groove 71d that is a concave portion of the first holding member 71. The position of the screw hole 71x and a position of a screw hole 8e that is formed in the one end portion of the reinforcement member 8 are aligned, and a screw 11 that is a fixing member is fastened in each of the screw holes 71x and 8e. With regard to a kind of the screw 11, a pan head screw, a truss head screw, a hexagon head bolt, or the like is applicable. For example, in a case where the groove 71d is shallow, a flat head screw may be used as the screw 11 to avoid protrusion of a head portion of the screw 11.

According to the solar cell module M0 configured as described above, the convex portion 71w of the first holding member 71 protrudes toward an inner side of the solar cell module, and thus it is possible to make the reinforcement member 8 short. Accordingly, it is possible to firmly support the solar cell panel 6 by the short reinforcement member 8.

In addition, as illustrated in Figs. 10 and 11, a notch depth L1 (a notching degree of the first extension portion 71b) of the notch portion 71c of the first holding member 71 is made to be small to avoid stress concentration to a portion of the screw 11, and thus the load-resistant performance of the entirety of the holding member 7 is hardly damaged. According to this, fatigue, bending, fracture, falling out, or the like of the fixing member such as the screw 11, which may occur due to stress concentration caused by notching of the second extension portion 71b of the first holding member 71, is less likely to occur.

When the notch depth L1 is set to be approximately 1/3 to 2/3 of a width L0 of the second extension portion 71b of the first holding member 71, the best balance is realized. The notch depth L1 is a length from an end of the second extension portion 71b to a portion at which the reinforcement member 8 and the convex portion 71w come into contact with each other. If the width L0 of the second extension portion 71b is too large, when distortion occurs on a light receiving surface side into which the peripheral portion of the solar cell panel 6 is fit, stress becomes concentrated. In contrast, if the width L0 is set to be small, a force that is resistant to the distortion decreases. Accordingly, the size of the second extension portion 71b is set in consideration of the strength of the entirety of the holding member 7.

In addition, when the convex portion 71w is provided at an approximately central position along the longitudinal direction of the first extension portion 71a of the first holding member 71, strength of the holding member 71 in a direction against distortion increases, and thus the load-resistant performance can further be improved. In addition, with the groove 71d, a head portion of the screw 11 can be hidden. In addition, with the groove 71d, when a solar cell array is constituted by a plurality of the solar cell modules, adjacent solar cell modules can be disposed in a close contact manner. Accordingly, an appearance of the solar cell array is well, and it is possible to closely install the solar cell modules, and thus it is possible to effectively use a power generation area.

### <Modification of Solar Cell Module>

Note that, the solar cell module is not limited to the embodiment described above, and various changes and modifications may be added to the embodiment. Hereinafter, modifications of the solar cell module will be described.

In addition, a description will be mainly made with respect to the first holding member 71 side of the modifications, but the modifications have the same configuration and effect on the second holding member 72 side, and thus a description thereof will be omitted.

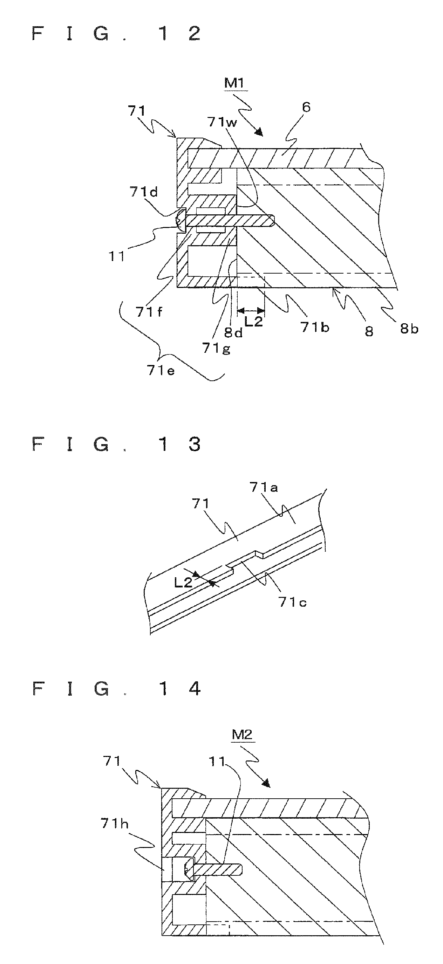

As the solar cell module, a solar cell module M1 illustrated in Figs. 12 and 13 may be employed. That is, on an inner side (side at which the solar cell panel 6 and the reinforcement member 8 are located) of the first holding member 71 along a longitudinal direction of the groove 71d provided on an outer side surface of the first holding member 71, the inside of the convex portion 71w at a portion at which the second end portion 8d of the reinforcement member 8 is located may be set to a hollow portion 71e, and the screw 11 may be fastened to both of two portions including a first supporting portion 71f (on a head portion side of the screw 11) and a second supporting portion 71g (on a reinforcement member 8 side) which constitute parts of the hollow portion 71e. The two portions including the first supporting portion 71f and the second supporting portion 71g to which the screw 11 is fastened are provided as described above, and thus a force of supporting the screw 11 can increase, and thus it is possible to firmly support the reinforcement member 8 with the screw 11 against distortion of the reinforcement member 8. As a result, load concentration to the screw 11 is avoided, and thus the load-resistant performance can be improved. In addition, with the first supporting portion 71f that is located on an outer side in comparison to the second supporting portion 71g with respect to the reinforcement member 8, the second supporting portion 71g on a reinforcement member 8 side can further protrude toward an inner side of the solar cell module M1, and thus it is possible to shorten the length of the reinforcement member 8. Accordingly, the notch depth L2 of the notch portion 71c of the first holding member 71 can be made to be small, and thus a decrease in strength of the first reinforcement member 71, which occurs due to notching of the second extension portion 71b of the first holding member 71, is suppressed.

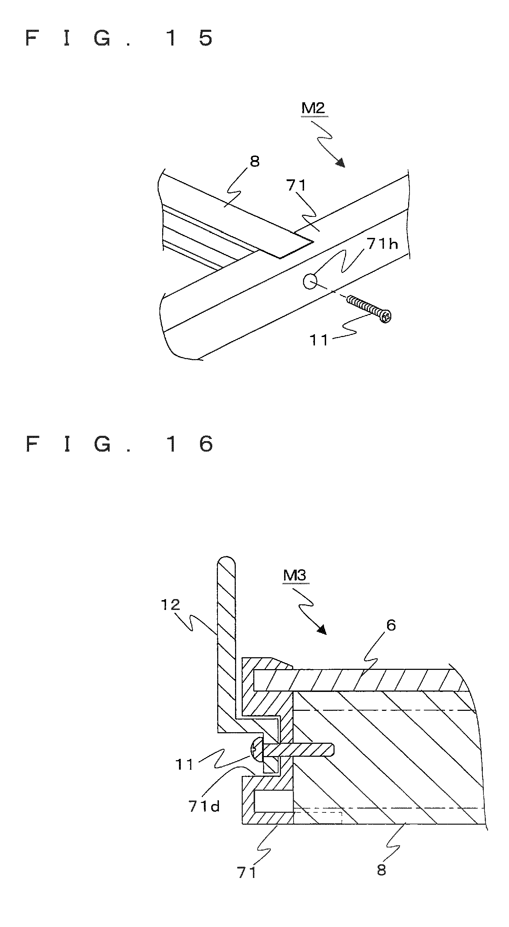

Alternatively, as the solar cell module, a solar cell module M2 illustrated in Figs. 14 and 15 may be employed. That is, instead of the groove 71d illustrated in Fig. 10, an introduction hole 71h into which the screw 11 is inserted may be provided at a portion, at which the reinforcement member 8 is located, of the first holding member 71. According to this, as is the case with the example of the solar cell module M1 illustrated in Figs. 12 and 13, the strength of the entirety of the first holding member 71 in a direction against distortion can be improved, and thus the notch depth L1 in the solar cell module M0 illustrated in Figs. 10 and 11 can be made small. In addition, according to the solar cell module M2 illustrated in Figs. 14 and 15, as is the case with the configuration of the solar cell module M0 illustrated in Fig. 10, the head portion of the screw 11 can be hidden, and thus when constituting the solar cell array by combining a plurality of the solar cell modules, adjacent solar cell modules can be disposed in a close contact manner. Accordingly, an appearance of the solar cell module is well, and it is possible to closely install the solar cell modules, and thus it is possible to effectively use a power generation area. In addition, after mounting the screw 11 to the introduction hole 71h, the introduction hole 71h can be closed with an acrylic resin sheet, a bush formed from a rubber, or the like provided with an adhesive on a rear surface to obtain a good external appearance.

Alternatively, as illustrated in Fig. 16, a solar cell module M3, which includes a snow guard metal fitting 12 formed from the same material as the holding member, may be employed. That is, the solar cell module M3 may be configured as follows. In the groove 71d of the first holding member 71 that constitutes the solar cell module M3, the reinforcement member 8 is fixed to an end of the snow guard metal fitting 12 by using the screw 11 that fixes the reinforcement member 8, and thus the snow guard metal fitting 12 is also fixed in the groove 71d. Accordingly, it is possible to provide a snow guard solar cell module in which the number of components is reduced. As described above, the head portion of the screw 11 does not protrude from the snow guard metal fitting 12 toward an outer side (adjacent solar cell module side), and thus adjacent two solar cell modules can be closely provided with the snow guard metal fitting 12 interposed therebetween. Accordingly, at the head portion of the screw 11 that fastens the snow guard metal fitting 12 to the first holding member 7 of the solar cell module M, such situation can be avoided that when snow or water from melted snow intrudes into a gap, refreezes and expands, the adjacent solar cell modules are caused to press each other and may break a fixing portion to a mount and the like, break the holding member 7 of the solar cell module and the like.

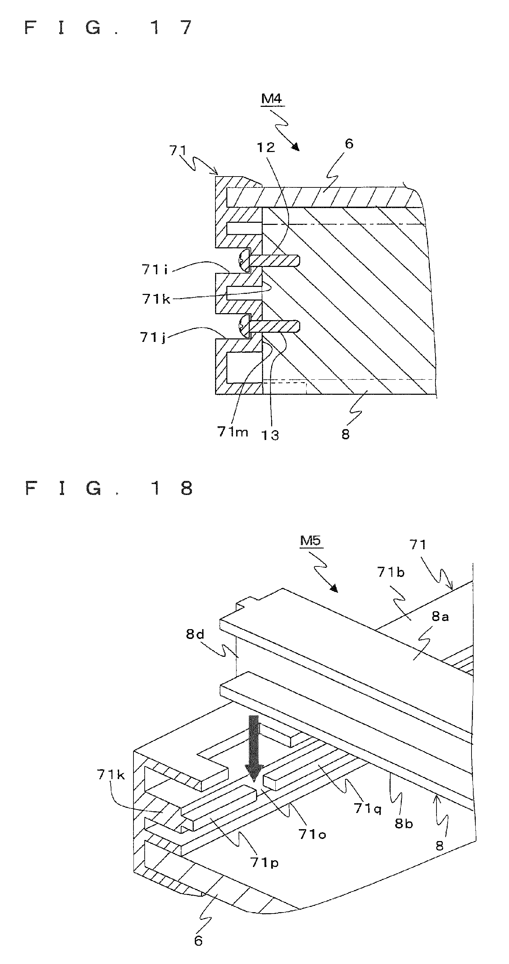

Alternatively, as the solar cell module, a solar cell module M4 illustrated in Fig. 17 may be employed. A plurality of grooves (in this embodiment, two grooves) that are first groove 71i and second groove 71j may be provided on an outer side of the first holding member 71 that constitutes the solar cell module M4, and a first convex portion 71k and a second convex portion 71m may be provided on an inner side of the first holding member 71 at portions corresponding to the grooves. According to this, it is possible to provide a solar cell module in which the reinforcement member 8 is more firmly fixed due to fixing of the reinforcement member 8 to the first holding member 71 by fastening screws 12 and 13 to these portions, and which has good load-resistant performance. In addition, a load is shared by a plurality of the screws, and thus it is possible to use screws, for example, smaller or thinner in comparison to the case of using one screw. Particularly, when using a thin screw, a vertical width of the first convex portion 71k and the second convex portion 71m (or groove width of the first groove 71i and the second groove 71j) in a thickness direction of the solar cell module M4 can be made narrow, and thus the height of the first holding member 71 can be lower. Accordingly, it is possible to reduce the thickness of the entirety of the solar cell module M4.

Alternatively, as the solar cell module, a solar cell module M5 illustrated in Fig. 18 may be employed. That is, in the solar cell module M5, the second end portion 8d of the reinforcement member 8 is made to extend toward the first holding member 71 side to be an elongated convex portion that extends in a direction from the first surface 8a to the second surface 8b. In addition, a first convex portion 71k that is elongated in a longitudinal direction of the first holding member 71 is provided on an inner side of the first holding member 71, and a second convex portion 71p, a third convex portion 71g, and the like, which further protrude from the first convex portion 71k toward an inner side of the solar cell module M5, are provided at a predetermined portion along the first convex portion 71k. In addition, the convex portion 8d of the reinforcement member 8 is guided by and inserted into an introduction groove 71o that is formed between the second convex portion 71p and the third convex portion 71g. Here, as is the case with the example illustrated in Figs. 10 to 17, fixing of the reinforcement member 8 to the first holding member 71 is performed by screw fixing, or the like.

According to the solar cell module M5 illustrated in Fig. 18, the first holding member 71 is provided with the first convex portion 71k, the second convex portion 71p, and the third convex portion 71q, and the reinforcement member 8 is provided with the convex portion 8d, and thus the strength of the first holding member 71 and the reinforcement member 8 is improved, and positioning of the reinforcement member 8 to a screw hole (not shown) and the like become easy due to the introduction groove 71o. Accordingly, movement in a distortion direction of the reinforcement member 8 can be regulated, and the load-resistant performance can be improved. In addition, the second convex portion 71p and the third convex portion 71q may be formed by extending the first convex portion 71k as long as the introduction groove 71o is formed.

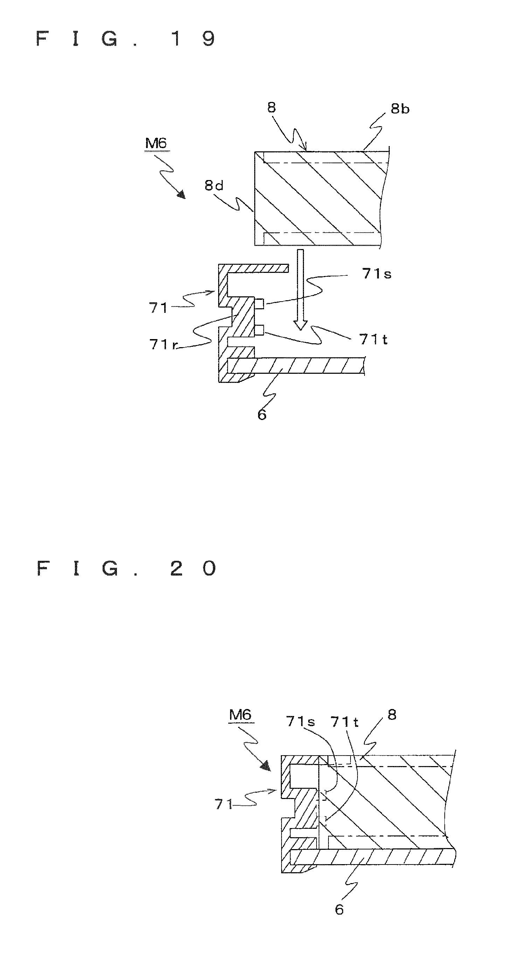

Alternatively, as the solar cell module, a solar cell module M6 illustrated in Figs. 19 and 20 may be employed. The solar cell module M6 is provided with a first convex portion 71r in which the first convex portion 71k in the configuration of Fig. 18 is made thicker. In addition, a plurality of second convex portions 71s and 71t are provided to the first convex portion 71r in a direction from the first surface 8a to the second surface 8b of the reinforcement member 8. According to this, suppression force against the distortion of the reinforcement member 8 may increase, and thus it is possible to further increase the load-resistant performance.

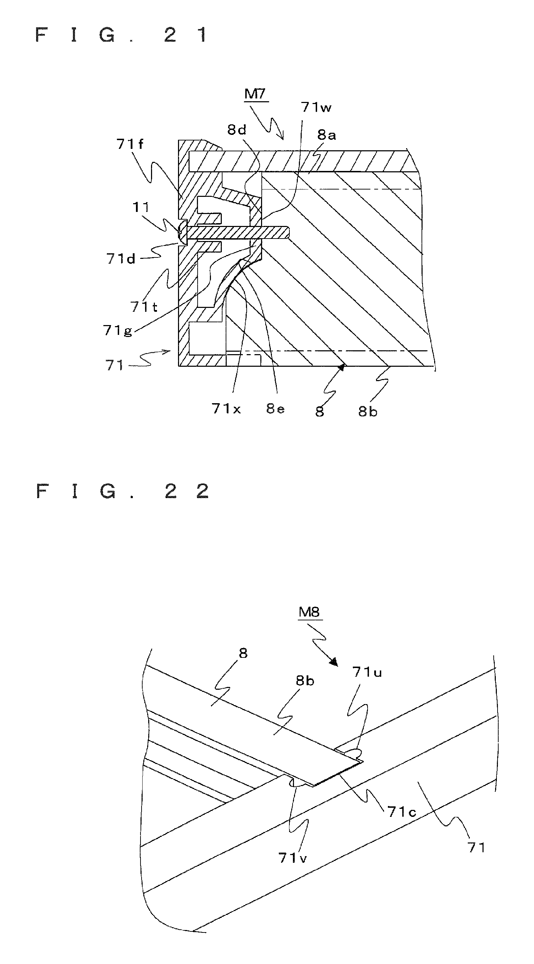

Alternatively, as the solar cell module, a solar cell module M7 illustrated in Fig. 21 may be employed. That is, the solar cell module M7 illustrated in Fig. 12 may have the following structure. That is, a curved concave portion 71x is provided to the first holding member 71 having a hollow portion surrounded by the first supporting portion 71f, the second supporting portion 71g, and the like, and a convex portion 8e is provided by extending the second end portion 8d of the reinforcement member 8 on a second surface 8b side in a curved surface shape toward the first holding member 71 side.

According to the solar cell module M7 illustrated in Fig. 21, in a case where a load is applied to the solar cell module M7, even when the reinforcement member 8 tries to escape in a rotation direction around the screw 11, rotation of the reinforcement member 8 is suppressed by the convex portion 8e of the second end portion 8d at a side surface of the second supporting portion 71g (portion at which the concave portion 71x and the convex portion 8e come into contact with each other), and thus resistance against rotation or distortion of the reinforcement member 8 is further improved, and thus it is possible to increase the load-resistant performance.

In addition, as illustrated in Fig. 21, a rib may be formed to the hollow portion in the vicinity of the screw 11 in a direction from the first supporting portion 7f to the second supporting portion 71g, thereby forming a guide portion 71t. When a load is applied to the solar cell module M7, deformation of the first holding member 71 by the screw 11 may be suppressed due to the guide portion 71t. In addition, the guide portion 71t can compensate for a decrease in strength of the first supporting portion 71f having a small thickness due to the groove 71d being formed as illustrated in Fig. 21. In addition, the guide portion 71t serves as a guide during insertion of the screw 11, and thus workability can be improved.

Alternatively, as the solar cell module, a solar cell module M8 illustrated in Fig. 22 may be employed. In the solar cell module M8 illustrated in Fig. 22, for example, second notch portions 71u and 71v for drainage, which have a semi-circular shape (for example, a semi-circular shape having a diameter of approximately 3 mm) in plan view, may be provided in a width direction of the notch portion 71c of the first holding member 71 (in a longitudinal direction of the first holding member 71). When the second notch portions 71u and 71v are provided, rain water, water from melted snow, and the like are allowed to flow out from a portion between the first holding member 71 and the reinforcement member 8, and thus corrosion of the first holding member 71 and the like due to water and the like is minimized.

In addition, the second notch portions 71u and 71v may have a shape other than the semi-circular shape. In addition, any one of the second notch portions 71u and 71v may be provided, or a plurality of small-sized notches may be provided. In addition, a gap (for example, approximately 2 mm) through which water flows out may be provided between the reinforcement member 8 and the notch portions (71u, 71v, and 71c) to improve drainage performance.

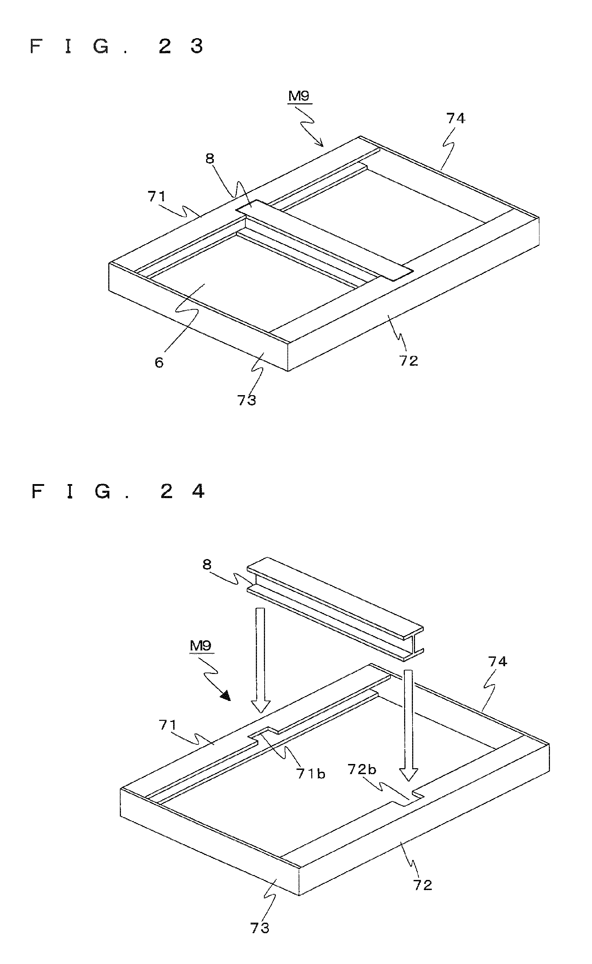

In addition, in the above-described examples, even if the head portion of the screw 11 is exposed to the outer side of the first holding member 71 and the second holding member 72 but there is no problem in consideration of installation and appearance, a solar cell module M9, in which a groove is not formed in a side surface of the holding member 7, illustrated in Figs. 23 and 24 may be employed. According to the solar cell module M9, the outer side surface of the first holding member 71 and the second holding member 72 includes a simplified configuration in which the above-described grooves 71d and 72d are not formed, and thus it is possible to perform working of the holding member 7 in a simple manner.

### <Solar Cell Array>

Next, an embodiment of the solar cell array including a plurality of the solar cell modules described above will be described.

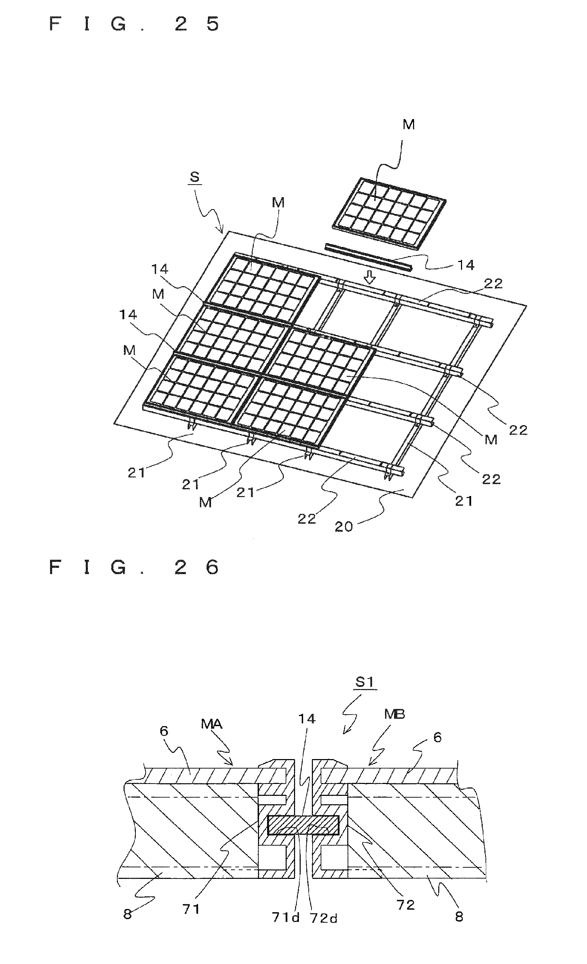

For example, as illustrated in Fig. 25, a mount is provided on an installation surface 20 such as a roof. The mount includes a plurality of vertical bars 21 which are constituted by the same material as that of the holding member of the solar cell module M and which are arranged at predetermined intervals, and horizontal bars 22 which are constituted by the same material as that of the vertical bars 21 and are arranged on the vertical bars 21 at equal intervals. Further, a plurality of the solar cell modules M are arranged on the mount, thereby constituting a solar cell array S.

In the solar cell array S, for example, in two adjacent solar cell modules, the first holding member 71 of one solar cell module and the second holding member 72 of the other solar cell module are connected to each other through a connection member 14.

For example, similar to a solar cell array S1 illustrated in Fig. 25 and a solar cell array S2 illustrated in Fig. 26, the connection member 14 includes rod-shaped portion, and the rod-shaped portions are inserted into grooves which are provided in a side surface of the first holding member 71 of one solar cell module MA, and a side surface of the second holding member 72 of the other solar cell module MB that faces the side surface of the first holding member 71, respectively. That is, when the long connection member 14 is inserted between a groove 71d of the first holding member 71 of the one solar cell module MA and a groove 72d of the second holding member 72 of the other solar cell module MB, the adjacent solar cell modules MA and MB are supported against each other, and thus it is possible to improve the load-resistant performance of the solar cell array. Here, the connection member 14 may be longer than the length of the solar cell modules MA and MB along the first holding member 71 and the second holding member 72. In addition, the connection member 14 may be configured in such a manner that short members (short pieces) of approximately 10 cm are dispersedly disposed at a plurality of portions. The higher fitting accuracy between the connection member 14 and the grooves 71d and 72d is, the further the load-resistant performance is improved. In addition, as illustrated in the drawings, a gap may be provided between the solar cell modules MA and MB, and the gap may be used for drainage.

Metal material such as aluminum, an aluminum alloy, stainless steel or the like, a resin molded product of an acrylic resin, a polycarbonate resin or the like, hard rubber, or the like may be used for the connection member 14.

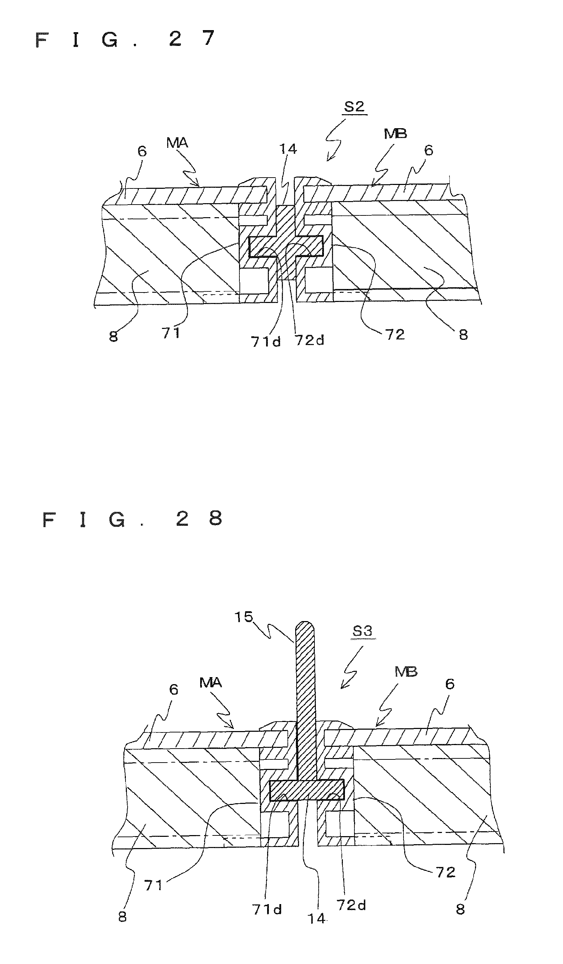

In addition, like the solar cell array S2 illustrated in Fig. 27, a cross-section of the rod-shaped portion of the connection member 14 cut in a direction perpendicular to a longitudinal direction may be an X shape (including a cross shape) or a T shape illustrated in Fig. 28. As illustrated in Fig. 27, in a case where the cross-sectional shape of the connection member 14 is the X shape, occurrence of falling out of the connection member 14 from solar cell modules may be minimized, and thus connection strength between solar cell modules can be improved. Particularly, this connection member is appropriate for an installation environment in which it is difficult to secure positional accuracy between the grooves 71d and 72d of the adjacent solar cell modules MA and MB such as on an uneven roof or the like, and thus it is necessary to provide a gap between the solar cell modules MA and MB.

In addition, as the solar cell array, a solar cell array S3 illustrated in Fig. 28 may be employed. As illustrated in Fig. 28, the first holding member 71 of one solar cell module MA and the second holding member 72 of the other solar cell module MB may be connected to each other through a connection member 14 provided with a snow guard metal fitting 15. According to the solar cell array S3, even when the number of components is minimized, it is possible to provide a good solar cell array S also capable of providing snow guard function.

### Description of the Reference Numerals

- 1: base
- 2: first sealing material
- 3: solar cell element group
31 solar cell element
32 connection member
33 electrode
- 4: second sealing material
- 5: rear surface sheet
- 6: solar cell panel
6a first side portion
6b second side portion
6c third side portion
6d fourth side portion
- 7: holding member
71 first holding member
71a first extension portion
71b second extension portion
71c notch portion
71d groove
71e hollow portion
71f first supporting portion
71g second supporting portion
71h introduction hole
71i first groove
71j second groove
71k first protrusion
71m second protrusion
71r first protrusion
71s second protrusion
71t second protrusion
71u second notch portion
71v second notch portion
71w third protrusion
72 second holding member
72a first extension portion
72b second extension portion
72c notch portion
72d groove
73 third holding member
74 fourth holding member
- 8: reinforcement member
8a first surface
8b second surface
8c first end portion
8d second end portion
8e convex portion
- 9: terminal box
- 10: output cable
- 14: connection member
- 15: snow guard metal fitting
- M: solar cell module
- M0: to M9 solar cell module
MA first solar cell module
MB second solar cell module
- S: solar cell array
- S1 to S3: solar cell array

## Claims

1. A solar cell module, comprising:
a solar cell panel which includes a first surface and a second surface opposite to the first surface, and includes first and second side portions at side surfaces different from each other at a peripheral portion;
a first holding member which holds the first side portion;
a second holding member which holds the second side portion; and
an elongated reinforcement member which is disposed on a second surface side of the solar cell panel,
wherein at least one of the first holding member and the second holding member includes a first extension portion which protrudes in a direction from the first surface to the second surface of the solar cell panel, and a second extension portion which is bent in an inner direction along the second surface of the solar cell panel and is provided with a notch portion, and
a first end portion of one end of the reinforcement member is inserted into the notch portion of the second extension portion, and a second end portion of the one end of the reinforcement member, which is located close to the solar cell panel as compared to the first end portion, is fixed to the first extension portion of the holding member.

2. The solar cell module according to Claim 1,
wherein a convex portion is provided in the first extension portion of the holding member and protrudes in an inner direction along the second surface of the solar cell panel, and the second end portion of the reinforcement member contacts with the convex portion.

3. The solar cell module according to Claim 1 or 2,
wherein a concave portion with a through-hole is provided in a surface on an outer side of a portion at which the second end portion of the reinforcement member is located in the first extension portion of the holding member, and
the solar cell module further comprises a fixing member which is inserted into the through-hole and fixes the second end portion of the reinforcement member to the holding member.

4. The solar cell module according to any one of Claims 1 to 3,
wherein a groove into which the second end portion is inserted is provided in a surface on an inner side of a portion at which the second end portion of the reinforcement member is located in the first extension portion of the holding member.

5. The solar cell module according to any one of claims 1 to 4,
wherein a part of the notch portion of the second extension portion of the holding member is a notch for drainage.

6. A solar cell array, comprising:
a plurality of solar cell modules according to any one of Claims 1 to 5.

7. The solar cell array according to Claim 6,
wherein the solar cell array includes two solar cell modules, the first holding member of one solar cell module and the second holding member of the other solar cell module are adjacent to each other, and the first holding member of the one solar cell module and the second holding member of the other solar cell module are connected to each other through a connection member.

8. The solar cell array according to Claim 7,
wherein the connection member includes a rod-shaped portion, and the rod-shaped portion is inserted into grooves which are provided in a side surface of the first holding member of the one solar cell module and a side surface of the second holding member of the other solar cell module respectively.

9. The solar cell array according to Claim 8,
wherein a shape of a cross-section, which is cut in a direction perpendicular to a longitudinal direction of the rod-shaped portion of the connection member, is an X-shape or a T-shape.
